Europäisches Patentamt

(19) European Patent Office

Office européen des brevets

(11) Veröffentlichungsnummer : **0 075 829**
**B1**

(12) **EUROPÄISCHE PATENTSCHRIFT**

(45) Veröffentlichungstag der Patentschrift :
30.01.85

(51) Int. Cl.⁴ : **G 03 B 42/02**

(21) Anmeldenummer : **82108682.4**

(22) Anmeldetag : **20.09.82**

(54) **Röntgenuntersuchungsgerät.**

(30) Priorität : **30.09.81 DE 3138911**

(43) Veröffentlichungstag der Anmeldung :
**06.04.83 Patentblatt 83/14**

(45) Bekanntmachung des Hinweises auf die Patenterteilung : **30.01.85 Patentblatt 85/05**

(84) Benannte Vertragsstaaten :
**DE FR**

(56) Entgegenhaltungen :
**DE-A- 1 522 185**
**DE-A- 2 051 033**
**DE-B- 1 114 085**
**DE-B- 1 127 704**
**GB-A- 1 231 917**
**US-A- 3 862 426**
**US-A- 3 866 048**

(73) Patentinhaber : **Siemens Aktiengesellschaft**
**Berlin und München Wittelsbacherplatz 2**
**D-8000 München 2 (DE)**

(72) Erfinder : **Finkenzeller, Johann**
**Herringstrasse 8**
**D-8520 Erlangen (DE)**
Erfinder : **Schmidt, Wilfried**
**Haselgraben 16**
**D-8504 Stein (DE)**
Erfinder : **Reinfelder, Heinz**
**Kärrnergasse 15**
**D-8700 Würzburg (DE)**

# Beschreibung

Die Erfindung bezieht sich auf ein Röntgenuntersuchungsgerät mit einem Zielgerät, mit Transportmitteln für den Transport eines Bildschichtträgers von einer Bereitschaftsposition in eine Aufnahmeposition und wieder zurück sowie mit einer Drehzahlregelung für den Antriebsmotor.

Die Zielgeräte von Röntgenuntersuchungsgeräten erlauben es, einen während der Durchleuchtung ermittelten Untersuchungsbefund auf einem Filmblatt festzuhalten. Zu diesem Zweck kann ein Filmblatt aus einer strahlengeschützten Bereitschaftsposition in eine zum Strahlenkegel zentrierte Aufnahmeposition des Zielgerätes und wieder zurück befördert werden. Dabei ist es von besonderer Wichtigkeit, daß die Röntgenaufnahme in einem möglichst kurzen Zeitintervall nach dem Auslösen auch belichtet werden kann. Dies ist deshalb so wichtig, weil viele Vorgänge im Körper des Patienten infolge der Eigenbewegung der Organe, wie z. B. der Lunge, des Magens oder des Herzens, oder infolge des Weitertransports eines eingespritzten Kontrastmittels, einer zeitlichen Veränderung unterliegen. Andererseits kann die Transportgeschwindigkeit des Filmblattes von der Bereitschaftsstellung in die Aufnahmestellung auch nicht zu hoch angesetzt werden, weil sonst das Röntgenuntersuchungsgerät bei der Beschleunigung und Verzögerung des Filmblattes oder auch einer Bildplatte und des zugehörigen Film- bzw. Bildschichtträgers (Filmwagen, Röntgenfilmkassette, Kassettenwagen usw.) zu Schwingungen angeregt wird, die letztendlich zu verwackelten Aufnahmen führen.

Durch die deutsche Patentschrift 976 870 und die deutsche Auslegeschrift 1 127 704 ist es zur Vermeidung von Erschütterungen beim Einfahren des Kassettenwagens in die Aufnahmeposition bereits bekannt, dem Transportwagen elektrische und pneumatische Dämpfungsglieder zuzuordnen, die die Beschleunigungskräfte, insbesondere bei der Einfahrt in die Aufnahmeposition vermindern und daher höhere Beschleunigungen des Bildschichtträgers bzw. der Röntgenfilmkassette zulassen.

Um den zeitlichen Abstand zwischen dem Auslösen der Aufnahme und dem Belichten derselben noch weiter verkürzen zu können, ist es durch die deutsche Offenlegungsschrift 2 051 033 bekanntgeworden, die Drehzahl des Antriebsmotors für den Kassettenantrieb über eine Drehzahlregelung zu steuern und so trotz hoher Beschleunigung und Verzögerung zu erreichen, daß Röntgenfilmkassette unabhängig von ihrer Größe und Masse mit einer sehr geringen, geregelten Geschwindigkeit in die Aufnahmeposition einfährt. Dadurch entstehen im Zeitintervall unmittelbar vor der Aufnahme nur noch geringe Verzögerungskräfte. Außerdem ist wegen der geringen Einfahrgeschwindigkeit auch ein exaktes Anhalten der Röntgenfilmkassette in der Aufnahmeposition möglich. Trotzdem wird das hiermit erreichbare kürzestmögliche Zeitintervall zwischen dem Auslösen und Belichtung der Aufnahme immer noch als zu lang empfunden. Immer wieder werden Aufnahmen zu spät belichtet.

Der Erfindung liegt die Aufgabe zugrunde, dem Arzt die Belichtung der Röntgenaufnahme zum richtigen Zeitpunkt zu erleichtern.

Bei einem Röntgenuntersuchungsgerät der eingangs genannten Art sind daher erfindungsgemäß die Transportmittel so ausgebildet, daß die gesamte Transportzeit des Bildschichtträgers von der Bereitschaftsposition in die Aufnahmeposition bei Übersichtsaufnahmen unabhängig von der zu transportierenden Masse konstant gehalten ist. Dies hat den Vorteil, daß der Arzt mit der Zeit ein Gefühl dafür bekommt, mit welcher Verzögerung die Röntgenaufnahme nach dem Auslösen tatsächlich belichtet wird. Insbesondere bei bewegten Objekten, hier sei auf die Peristaltik des Magens, die Lungenbewegungen oder auf das Weiterströmen von Kontrastmittelbrei verwiesen, kann der Arzt so abschätzen, in welchem Zeitintervall die interessierende Position des Organs bzw. des Kontrastmittels erreicht sein wird. Hierdurch wird es ihm ermöglicht, die Röntgenaufnahme, um dieses Zeitintervall verschoben, vorzeitig auszulösen. In der bisherigen Untersuchungstechnik war dieses Zeitintervall durch die unterschiedlich großen Massen der unterschiedlich großen Bildschichtträger bzw. Röntgenfilmkassetten unterschiedlich lang, so daß sich kein Gefühl für eine Vorhaltezeit ausbilden konnte. Das führte dazu, daß sich die Wünsche bisher auf immer noch kürzere Übergangszeiten konzentrierten, die im Grunde genommen niemals kurz genug sein können.

Eine weitere Verbesserung der Konstanz des Zeitintervalls in dem die Röntgenaufnahme vor dem festzuhaltenden Ereignis ausgelöst werden muß, kann erreicht werden, wenn die Transportzeit in Weiterbildung der Erfindung unabhängig von der beim Ablauf eines Unterteilungsprogrammes unterschiedlichen Länge der einzelnen Transportstrecken konstant gehalten ist. Hierdurch werden Unterschiede im Zeitintervall zwischen der Auslösung der Röntgenaufnahme und der Belichtung des Filmblattes, die durch die unterschiedlich langen Transportwege während eines Unterteilungsprogrammes bedingt sind, vermieden.

Die Gesamttransportzeit läßt sich verkürzen, wenn die Phasen der Beschleunigung und der Verzögerung in Weiterbildung der Erfindung während jeweils ein und desselben Transportvorganges praktisch gleich lang und in ihrem Verlauf symmetrisch zueinander gehalten sind. Dies umfaßt auch den Fall, daß der Bildschichtträger während der gesamten ersten Hälfte der Wegstrecke beschleunigt und während der gesamten zweiten Hälfte der Wegstrecke verzögert wird. Hierdurch wird der Rechen- bzw. Speicheraufwand für die Regelung des Antriebsmotors wegen der Symmetrie verringert. Dabei ergibt sich die für alle Wegstrecken einzuhaltende Transportzeit aus der kürzestmöglichen Transportzeit, die bei dem längstmöglichen Transportweg mit der größmöglichen Kassette ohne Verwackeln der Aufnahme einzuhalten ist.

In besonders vorteilhafter Ausgestaltung der Erfindung können in der Bereitschaftsposition Mittel für die definierte Positionierung des Bildschichtträgers sowie Meßmittel für die Messung der Breite des Bildschichtträgers in Transportrichtung und dem Antriebsmotor, Mittel zur Messung der jeweiligen Transportstrecke zugeordnet sein und können diese Meßmittel an einem Rechner für die Ermittlung des je Teilungsschnitt des separat eingegebenen Unterteilungsprogramms zurückzulegenden Gesamtweges für die Wahl eines bei der vorgegebenen Transportzeit und dem errechneten Transportweg bestimmten Orts-Zeitprofils und für den Vergleich der in dem seit Aufnahmeauslösung verflossenen Zeitintervall zurückgelegten Transportstrecke mit der als Sollwert im Orts-Zeitprofil für dieses Zeitintervall errechneten Transportstrecke angeschlossen sein. Diese Zuordnung der einzelnen Meßmittel erlaubt eine Konstruktion eines Rechners, der für diesen Zweck mit geringstmöglichen baulichen Aufwand ein Höchstmaß an Regelgenauigkeit gewährleistet.

Eine gleichermaßen einfache wie zweckmäßige Konstruktion ergibt sich, wenn in Weiterbildung der Erfindung mit dem Antriebsmotor eine sich in dem Lichtstrahl mindestens einer Lichtschranke drehende Lochscheibe gekuppelt ist. Eine solche im Lichtweg einer Lichtschranke angeordnete Lochscheibe ist gleichermaßen einfach, zuverlässig und erlaubt eine sehr genaue Bestimmung von Wegstrecken, zumal sie sowohl vor als auch nach Untersetzungsgetrieben eingebaut werden kann.

In weiterer Ausgestaltung der Erfindung kann im Bereich der Bereitschaftsposition ein die Einfahrt des Bildschichtträgers stoppender Fühler für die Kanten des Bildschichtträgers angeordnet sein. Diese Maßnahme garantiert eine exakt definierte Ausgangsposition für den Transport des Bildschichtträgers von der Bereitschaftsposition in die Aufnahmeposition und ist somit Voraussetzung für eine exakte Wegvorgabe bei der Einfahrt in die jeweilige Aufnahmeposition.

In weiterer Ausgestaltung der Erfindung können die bei der Vorbeifahrt des Bildschichtträgers an einer Lichtschranke während der Unterbrechung des Lichtweges an der Lochscheibe gezählten Impulse als Maß für die Breite des Bildschichtträgers in Transportrichtung gezählt werden. Diese Impulszahlen bilden zusammen mit der festgesetzten Transportzeit und dem gewählten Unterteilungsprogramm die Grundlage für die Berechnung des Orts-Zeitprofils durch den Rechner.

Weitere Einzelheiten der Erfindung werden anhand einiger in den Figuren dargestellter Ausführungsbeispiele erläutert.

Es zeigen :

Figur 1 eine schematische Darstellung der Transportstrecke eines Kassettenwagens in einem Röntgenzielgerät,

Figur 2 ein Diagramm der Transportgeschwindigkeit,

Figur 3 ein Diagramm der Beschleunigung während des Transportvorganges,

Figur 4 ein Diagramm des je Zeiteinheit zurückgelegten Weges,

Figur 5 eine Anordnung zur Relegung der Motordrehzahl,

Figur 6 eine andere Variante des Rechners der Fig. 5 für die Sollwertvorgabe für den Transportweg und

Figur 7 eine weitere Art der Sollwertvorgabe für den Transportweg.

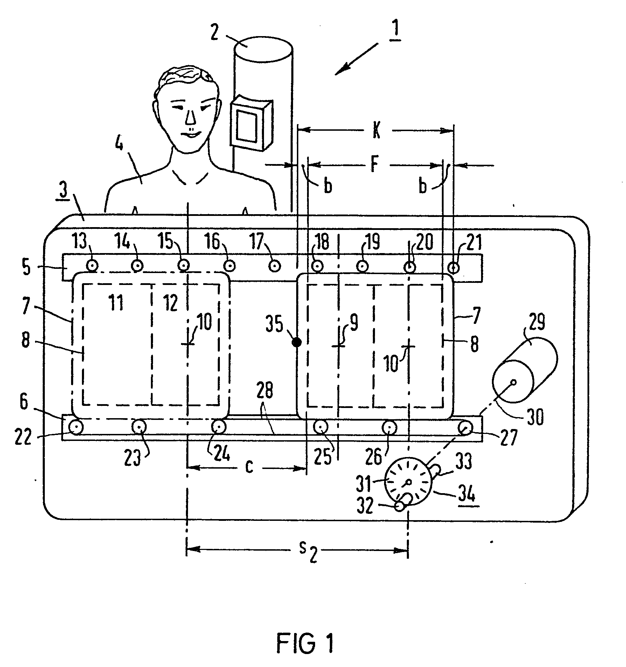

Die Figur 1 zeigt in schematischer Darstellung ein Röntgenuntersuchungsgerät 1 mit einer Röntgenröhre 2 und einem Röntgenzielgerät 3. Zwischen dem Röntgenzielgerät 3 und der Röntgenröhre 2 ist ein Patient 4 angedeutet. Im Röntgenzielgerät 3 befinden sich zwei parallele Transportschienen 5, 6, zwischen denen eine Röntgenfilmkassette 7 von einer Bereitschaftsposition in die jeweilige Aufnahmeposition transportiert werden kann. Die in der Bereitschaftsposition befindliche Röntgenfilmkassette 7 ist ausgezogen dargestellt. Dieselbe Röntgenfilmkassette 7 ist in der Aufnahmeposition mit strichpunktierten Linien in einer Stellung eingezeichnet, die sie bei Zweifachunterteilung des Filmformats während der zweiten Aufnahme einnehmen würde. Ein in der Röntgenfilmkassette 7 befindliches Filmblatt 8 sowie die gewählte Zweifachunterteilung desselben, sind mit gestrichelten Linien dargestellt. Das Zentrum 9, 10 des jeweiligen Aufnahmefeldes 11, 12 ist fadenkreuzartig markiert. In der Aufnahmeposition fällt dieses Zentrum mit dem eingeblendeten Zentralstrahl (nicht dargestellt) zusammen.

Die obere und die untere Transportschiene 5, 6 tragen freilaufende Walzen 13, 14, 15, 16, 17, 18, 19, 20, 21, 22, 23, 24, 25, 26, 27. Über diese ist auf der unteren Transportschiene 6 ein über zwei Transportwalzen 22, 27 gespanntes Transportband 28 geführt. Zwischen diesem Transportband 28 und den jeweils gegenüberliegenden Transportwalzen 13 bis 21 der oberen Transportschiene 5 ist die Röntgenfilmkassette 7 eingespannt. Die in der Fig. rechte äußere Transportwalze 27 wird von einem Motor 20 angetrieben. Auf dessen Achse 30 befindet sich eine am Rand mit Schlitzen versehene, sog. Lochscheibe 31. Die Lochscheibe ist so angeordnet, daß ihre Schlitze zwischen einer Lichtquelle 32 und einem auf die Lichtquelle ausgerichteten Fotodetektor 33 eine Lichtschranke 34 hindurchdrehbar sind. Eine weitere Lichtschranke 35 ist der Bereitschaftsposition zugeordnet. Sie ist so angeordnet, daß eine in die Bereitschaftsposition transportierte Röntgenfilmkassette ihren Lichtstrahl unterbricht.

In dieser Fig. 1 ist mit K die Breite der Röntgenfilmkassette 7 in Transportrichtung und mit F die Breite des in der Röntgenfilmkassette eingelegten Filmblattes 8 bezeichnet. Mit b ist der Abstand zwischen dem äußeren Rand der Röntgenfilmkassette und dem inneren Rand des Röntgenfilmblattes bezeichnet. $S_2$ stellt den Transportweg dar, um den die Röntgenfilmkassette von der Bereitschaftsposition in die Aufnahmeposition transportiert werden muß, damit das jeweilige Zentrum des Aufnahmefeldes 11, 12 in der Aufnahmeposition zum Zentralstrahl justiert ist.

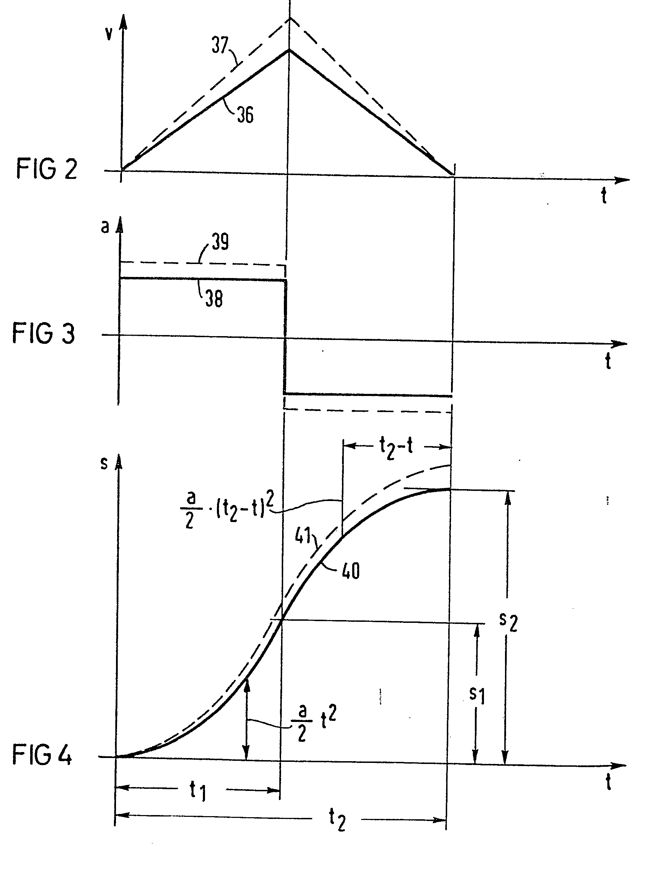

Die Fig. 2 zeigt in einem Diagramm den gewünschten zeitlichen Verlauf der Transportgeschwindigkeit der Röntgenfilmkassette 7. Dieser Geschwindigkeitsverlauf soll symmetrisch sein und für alle Transportwege von der Bereitschaftsstellung in die verschiedenen Aufnahmepositionen eine gleichlange Transportzeit einhalten. Die ausgezogene Kurve 36 zeigt daher das Geschwindigkeitsdiagramm für einen kürzeren Transportweg als die gestrichelte Kurve 37.

Die Fig. 3 zeigt den zur Fig. 2 passenden Verlauf der Beschleunigung a. Man erkennt daraus, daß die Röntgenfilmkassette 7 während der ersten Hälfte der insgesamt verfübaren Transportzeit $T_2$ konstant beschleunigt und während der zweiten Hälfte dieser Transportzeit konstant verzögert wird. Ferner erkennt man, daß die Beträge der Beschleunigung und Verzögerung bei ein und demselben Transportvorgang untereinander exakt gleich sind. Der Betrag der Beschleunigung hängt aber von der zu erreichenden Geschwindigkeit bzw. von der zurückzulegenden Transportstrecke und der Masse der Kassette ab. Auch hier ist die ausgezogene Kurve 38 der kleineren Transportstrecke und/oder kleineren Masse zuzuordnen als die gestrichelte Kurve 39.

Die Fig. 4 zeigt in einem Weg-Zeit-Diagramm die jeweils zurückgelegte Wegstrecke für die beiden in Fig. 3 und 4 dargestellten Transportvorgänge. Dabei ist $t_2$ die gesamte verfügbare konstante Transportzeit und $t_1 = 1/2 \cdot t_2$ jene für die Beschleunigung bzw. Verzögerung verfügbare Transportzeit. $S_2$ stellt den gesamten Transportweg des jeweiligen Transportvorganges dar, d. h. die Länge des jeweiligen Teilungsschrittes des gewählten Unterteilungsprogrammes. $S_2$ ist für die verschiedenen Teilungsschritte unterschiedlich lang. $S_1 = 1/2 S_2$ ist jene für die Beschleunigung bzw. Verzögerung zur Verfügung stehende Wegstrecke. Mit $S = a/2 \cdot t^2$ ist die nach der Zeit T zurückgelegte Transportstreckte bezeichnet, dies gilt für $t \geqq t_1$. Für $t \leqq t_1$ muß von $t_2$ zurückgerechnet werden, so daß dann $S = a/2 (t_2-t_2)$ gilt. Auch hier entspricht die ausgezogene Kurve 40 einem kleineren Transportweg als die gestrichelte Kurve 41.

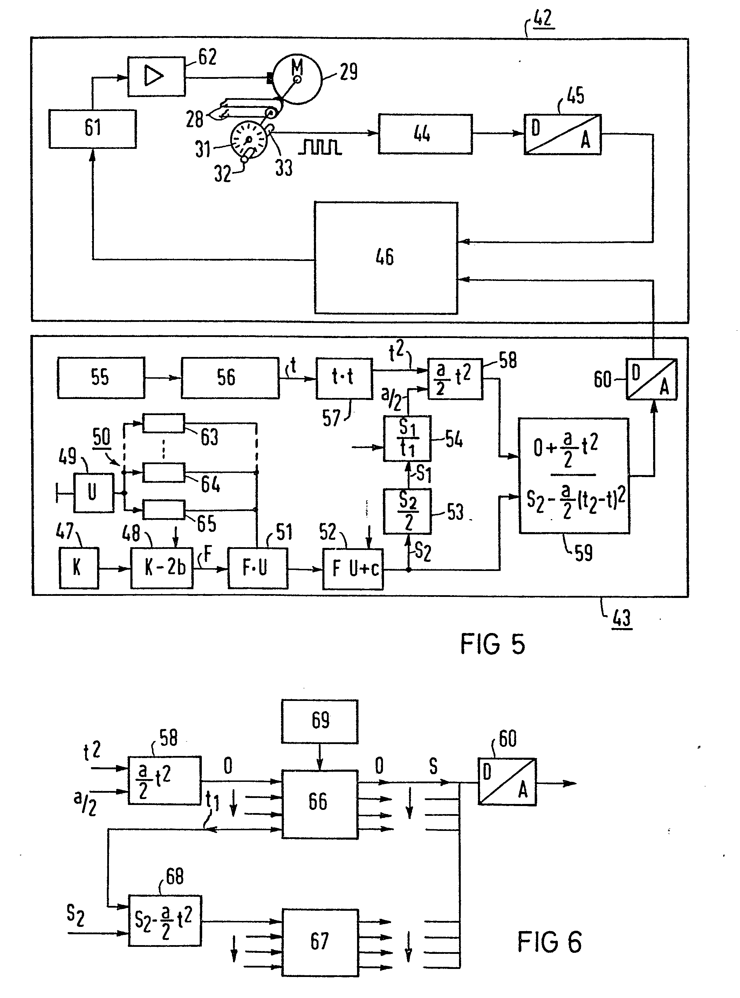

Die Fig. 5 zeigt eine Anordnung zur Regelung der Motordrehzahl in schematischer Darstellung. Diese besteht im wesentlichen aus ∩inem Regelkreis 42 für den Motor 29 und einem an den Regelkreis angeschlossenen Rechner 43 für die Sollwertvorgabe. Beim Einschalten des Motors 29 wird nicht nur das Transportband 28 angetrieben das, wie die Fig. 1 zeigt, die Röntgenfilmkassette 7 von der Bereitschaftsposition in die Aufnahmeposition befördert, sondern es wird zugleich auch die Lochscheibe 31 mitgedreht. Diese unterbricht die Beleuchtung des Fotodetektors 33 und erzeugt an dessen Ausgang Impulse, die in einem angeschlossenen Zähler 44 gezählt werden. Sie sind ein Maß für die tatsächlich zurückgelegte Transportstrecke (Istwert). Sie werden über einen Digital-Analog-Wandler 45 in einen Analogwert umgewandelt und liegen so an dem einen Eingang eines Soll-Istwert-Vergleichsgliedes 46 an.

Hiervon unabhängig sind vor der ersten Röntgenaufnahme, die beim Einfahren der Röntgenfilmkassette 7 in die Bereitschaftsposition, während des Abdeckens der in Transportrichtung unmittelbar vor der Bereitschaftsposition angeordneten Fotodecktors 33 der Lichtschranke 35 durch die Röntgenfilmkassette gezählten Impulse gespeichert worden. Der so erhaltene Zahlenwert K — er entspricht der Breite der eingelegten Röntgenfilmkassette 7 — liegt beim Stellglied 47 (Fig. 5) an. In einer anschließenden Rechenstufe 48 wird vom Wert K der vorbekannte konstante Wert 2b abgezogen, der der Differenz zwischen der Breite der Röntgenfilmkassette und dem eingelegten Filmblatt 8 entspricht. Der so erhaltene Wert F entspricht der Breite des eingelegten Filmblattes 8. Bei nunmehriger Wahl des Unterteilungsprogrammes über das Stellglied 49 werden die den einzelnen Teilungsschritten des gewählten Unterteilungsprogrammes entsprechenden Faktoren U über ein bei jeder Aufnahmeauslösung weiterschaltendes Schrittschaltwerk 50 nacheinander an den zweiten Eingang einer Multiplikationsstufe 51 gelegt. Die Werte von U betragen bei zweifacher Unterteilung, im ersten Unterteilungsschritt 1/4 und im zweiten Unterteilungsschritt 3/4. Bei dreifacher Unterteilung 1/6, 3/6 und 5/6 usw. In einer weiteren Rechenstufe 52 wird dem Produkt F. U der konstante Wert c, der dem Abstand von der Mitte der Aufnahmeposition zum Filmblattrand entspricht, hinzugezählt. Der erhaltene Betrag $S_2$ entspricht je nach dem ob bei gewählter Zweifachunterteilung für den ersten Teilschritt U = 1/4 oder für den zweiten Teilschritt U = 3/4 verwendet wurde, dem Transportweg von der Bereitschaftsposition in die erste bzw. zweite Aufnahmeposition. Dieser Wert wird in einer weiteren Rechenstufe 53 halbiert. Der so erhaltene Wert $S_1$ entspricht der Wegstecke, während der beschleunigt bzw. verzögert werden muß. Der Weg $S_1$ wird in der daran anschließenden Rechenstufe 54 durch einen vorgegebenen konstanten Wert $t_1$, der der halben festgesetzten Transportzeit $t_2$ entspricht, dividiert. Das Ergebnis a/2 entspricht dem halben Wert der hierzu erforderlichen Beschleunigung a.

Der Rechner 43 enthält außerdem einen synchron mit dem Motor 29 in Gang setzbaren Zeittaktgeber 55. Dessen Impulse werden von einem angeschlossenen Zähler 56 gezählt. Der am Ausgang des Zählers 56 verfügbare Wert t entspricht der seit dem Ingangsetzen des Zeittaktgebers 55 und des Motors 29 verflossenen Zeit. Er liegt an einer Quadrierstufe 57 an. Dessen Ausgangswert $t^2$ liegt an dem Eingang einer

Rechenstufe 58 an, die diesen Wert mit dem am anderen Eingang anliegenden Wert a/2 multipliziert. Das Ergebnis $a/2 \cdot t^2$ entspricht dem zum Zeitpunkt t zurückgelegten Sollwert S. Dieser Sollwert liegt über eine noch zu besprechende Schaltstufe 59 an einem Digital-Analog-Wandler 60 an. Dieser Digital-Analog-Wandler ist an dem anderen Eingang des Soll-Istwert-Vergleichsgliedes 46 des Regelkreises 42 angeschlossen. Das Soll-Istwert-Vergleichsglied steuert einen Regler 61, der über einen Verstärker 62 unmittelbar auf den Motorstrom einwirkt.

Sobald die halbe für den Transportvorgang verfügbare Zeit $t_2$ verflossen ist, d. h. sobald $t = t_1 = 1/2t_2$ ist, schaltet die Schaltstufe 59 um und bildet den Wert $S_2 - a/2 (t_2-t_1)^2 = S$. Es wird also von $S_2$, d. h. von der Aufnahmeposition oder Zielposition zurückgerechnet und die Verzögerung als negative Beschleunigung eingesetzt.

Nach dem Einfahren in die jeweilige Aufnahmeposition und dem Auslösen der Röntgenaufnahme wird nach demselben Schema wieder in die Bereitschaftsstellung verfahren, wobei lediglich der Drehsinn des Motors 29 umgedreht ist und die endgültige Stillsetzung des Motors erst nach dem Passieren der der Bereitschaftsposition zugeordneten Lichtschranke 35 in hier nicht weiter dargestellter Weise vorgenommen wird. Die Lichtschranke 35 schaltet aber nicht nur den Motor 29 ab, sondern schaltet auch das Schrittschaltwerk 50 für das Unterteilungsprogramm um einen Schritt weiter, so daß bei zweifacher Unterteilung statt dem Wert U = 1/4 nunmehr der Wert U = 3/4 für die nächste Röntgenaufnahme an der Multiplikationsstufe 51 anliegt.

Die konstanten Werte 2b, c, $t_1$ sowie die Zahlenwerte der einzelnen Schritte des wählbaren Unterteilungsprogramms lassen sich im Rechner in den Speicherplätzen 63, 64, 65 fest einspeichern. Dadurch kann nach dem Einlegen der Röntgenfilmkassette 7 — d. h. sobald die beim Passieren der der Bereitschaftsposition zugeordneten Lichtschranke 35 gezählten, der Kassettenbreite K entsprechenden Impulse des Fotodektektors 33 und der durch Eintasten des Unterteilungsprogramms dem jeweils nächsten Teilungsschritt zugeordnete Wert von U anliegen — beim Auslösen der Aufnahme und dem damit verbundenen Einschalten des Zeittaktgebers 55 und des Motors 29, die Regelung seiner Drehzahl in der vorgenannten Weise ablaufen.

In einer anderen, in der Fig. 6 dargelegten Ausführungsvariante des Rechners werden die Wegsollwerte S für jeden einzelnen Zeitabschnitt in der gleichen Weise errechnet, wie das anhand der Fig. 5 erläutert wurde. Abweichend vom Ausführungsbeispiel der Fig. 5 werden jedoch diese Wegsollwerte S, die für jeden einzelnen Taktschritt des Zeittaktgebers 55 errechnet wurden, in einen der Beschleunigungsphase zugeordneten Speicher 66 und einen zweiten der Verzögerungsphase zugeordneten Speicher 67 abgespeichert. Hierzu liegt am Eingang des ersten Speichers 66 die Rechenstufe 58 (Fig. 5) mit dem Wert $a/2 \cdot t^2$ an. Am Eingang des zweiten, dem ersten Speicher 66 nachgeschalteten Speicher 67 liegt die Rechenstufe 68 mit dem Wert $S_2 - a/2 \cdot t^2$ an. Den beiden Speichern ist ein Zeittaktgeber 69 zugeordnet. Beim Auslösen der Röntgenaufnahme wird dann mit dem Antriebsmotor 29 der Zeittaktgeber 69 eingeschaltet, der in den vorgegebenen Zeitintervallen die einzelnen Wegsollwerte s von den Speichern 66 und 67 abruft. Diese liegen dann über den Digital-Analog-Wandler 60 in gleicher Weise, wie in der Fig. 5 beschrieben, am Soll-Istwert-Vergleichsglied 46 der Regelstrecke 42 an.

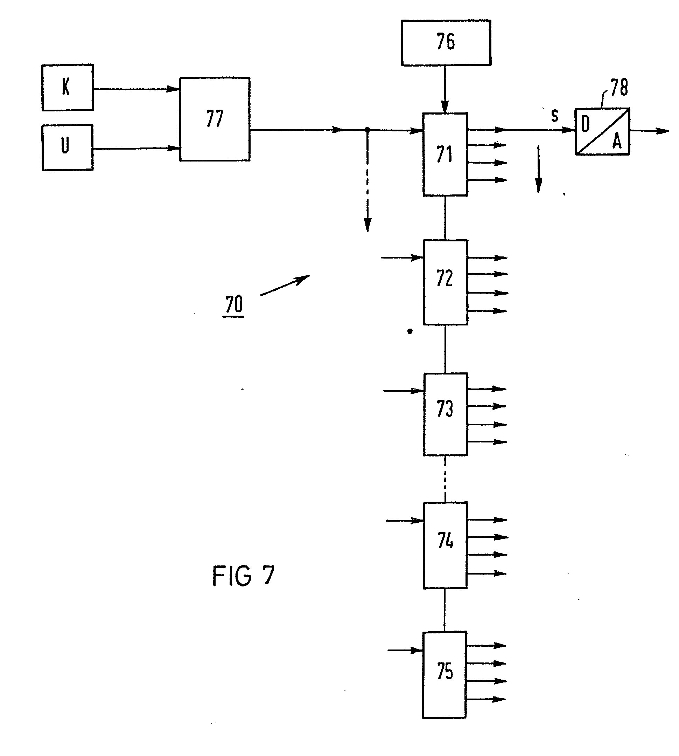

Schließlich zeigt die Fig. 7 eine weitere abgewandelte Ausführungsform der Erfindung. Dem in der Fig. 5 dargestellten Regelkreis 42 für die Steuerung des Motors 29 ist hier zur Sollwertvorgabe eine Speicheranordnung 70 zugeordnet. Alle Speicher 71, 72, 73, 74, 75 dieser Speicheranordnung 70 sind an einen gemeinsamen Zeittaktgeber 76 angeschlossen. In den einzelnen Speichern sind für jedes zugelassene Kassettenformat und für jedes bei dem jeweiligen Kassettenformat wählbaren Unterteilungsprogramm U die je Taktschritt extern errechneten Soll-Weg-Vorgaben S abgespeichert.

Bei der Abtastung der Kassettenmaße, wie das anhand des Ausführungsbeispiels der Fig. 1 und 5 erläutert wurde, wird der Wert K und bei der Wahl des Unterteilungsprogrammes der entsprechende Wert U den beiden Eingängen einer Wählvorrichtung 77 eingegeben. Diese Wählvorrichtung aktiviert den dieser Kassettenbreite und diesem Unterteilungsprogramm entsprechenden Speicher 71, 72, 73, 74, 75 der Speicheranordnung 70. Bei der Auslösung der Aufnahme und dem damit verbundenen Einschalten des Motors 29 und des Taktgebers 76 werden nun im Takt des Zeittaktgebers die einzelnen in dem jeweiligen Speicher abgespeicherten Weg-Sollwert-Vorgaben S nacheinander abgerufen und über den nachgeschalteten Digital-Analog-Wandler 78 an das Soll-Istwert-Vergleichsglied 46 des Regelkreises weitergeleitet. Der weitere Steuerungsablauf entspricht dann wieder dem, der anhand der Fig. 5 beschrieben worden ist.

## Ansprüche

1. Röntgenuntersuchungsgerät mit einem Zielgerät (3), mit Transportmitteln für den Transport eines Bildschichtträgers (7) von einer Bereitschaftsposition in eine Aufnahmeposition und wieder zurück, sowie mit einer Drehzahlregelung für den Antriebsmotor (29), dadurch gekennzeichnet, daß die Transportmittel so ausgebildet sind, daß die gesamte Transportzeit des Bildschichtträgers (7) von der Bereitschaftsposition in die Aufnahmeposition bei Übersichtsaufnahmen unabhängig von der zu transportierenden Masse konstant gehalten ist.

2. Röntgenuntersuchungsgerät nach Anspruch 1, dadurch gekennzeichnet, daß die Transportzeit unabhängig von der beim Ablauf eines Unterteilungsprogrammes unterschiedlichen Länge der Transportstrecke (S₂) konstant gehalten ist.

3. Röntgenuntersuchungsgerät nach Anspruch 1, dadurch gekennzeichnet, daß die Phasen der Beschleunigung und der Verzögerung während jeweils ein und desselben Transportvorganges praktisch gleich lang und in ihrem Verlauf symmetrisch zueinander gehalten sind.

4. Röntgenuntersuchungsgerät nach Anspruch 1, dadurch gekennzeichnet, daß der Bereitschaftsposition Mittel (35) für die definierte Positionierung des Bildschichtträgers (7) sowie Meßmittel (31, 32, 33, 34) für die Messung der Breite des Bildschichtträgers in Transportrichtung und dem Antriebsmotor (29), Mittel (31, 32, 33, 34) zur Messung der jeweiligen Transportstrecke zugeordnet sind und diese Meßmittel an einem Rechner (43) für die Ermittlung des je Teilungsschritt des separat eingegebenen Unterteilungsprogramms zurückzulegenden Gesamtweges (S₂), für die Wahl eines bei der vorgegebenen Transportzeit und dem errechneten Transportweg bestimmten Orts-Zeitprofils und für den Vergleich der in dem seit Aufnahmeauslösung verflossenen Zeitintervall zurückgelegten Transportstrecke mit der als Sollwert im Orts-Zeitprofil für dieses Zeitintervall errechneten Transportstrecke angeschlossen sind.

5. Röntgenuntersuchungsgerät nach Anspruch 1, dadurch gekennzeichnet, daß mit dem Antriebsmotor (29) eine sich in dem Lichtstrahl mindestens einer Lichtschranke (34) drehende Lochscheibe (31) gekuppelt ist.

6. Röntgenuntersuchungsgerät nach Anspruch 1, dadurch gekennzeichnet, daß im Bereich der Bereitschaftsposition ein die Einfahrt des Bildschichtträgers stoppender Fühler (35) für die Kanten des Bildschichtträgers (7) angeordnet ist.

7. Röntgenuntersuchungsgerät nach Anspruch 5 und 6, dadurch gekennzeichnet, daß die bei der Vorbeifahrt des Bildschichtträgers (7) an einer Lichtschranke (35) während der Unterbrechung des Lichtweges an einer Lochscheibe (31) gezählten Impulse als Maß für die Breite des Bildschichtträgers (7) in Transportrichtung gezählt werden.

8. Röntgenuntersuchungsgerät nach Anspruch 6, dadurch gekennzeichnet, daß neben der Bereitschaftsposition eine den Einfahrweg des Bildschichtträgers (7) mit ihrem Strahl kreuzende Lichtschranke (35) angeordnet ist.

9. Röntgenuntersuchungsgerät nach Anspruch 8, dadurch gekennzeichnet, daß die Lichtschranke (35) den Antriebsmotor nach dem Passieren des Bildschichtträgers abschaltet.

10. Röntgenuntersuchungsgerät nach Anspruch 4, dadurch gekennzeichnet, daß der Rechner (43) die dem Transportweg von der Bereitschaftsposition in die Aufnahmeposition entsprechenden Impulszahlen aufgrund der der Breite des Bildschichtträgers (7) entsprechenden Impulszahlen und des eingegebenen Unterteilungsprogramms errechnet.

11. Röntgenuntersuchungsgerät nach Anspruch 10, dadurch gekennzeichnet, daß der Rechner (43) die Beschleunigung und die zur Beschleunigung symmetrische Verzögerung unter Zugrundelegung des errechneten Transportweges und der festgelegten Transportzeit errechnet.

12. Röntgenuntersuchungsgerät nach Anspruch 10 und 11, dadurch gekennzeichnet, daß der Rechner (43) in vorgegebenen Zeitintervallen die gemäß dem Orts-Zeitprofil zu erwartenden Impulszahlen mit dem ab Aufnahmeauslösung entsprechend der zurückgelegten Transportstrecke aufsummierten Impulszahlen vergleicht und mit dem Vergleichswert je nach Vorzeichen einen Regler (61) für den Motorstrom bzw. die Motorlast steuert.

13. Röntgenuntersuchungsgerät nach Anspruch 10 und 12, dadurch gekennzeichnet, daß die aufsummierten, dem tatsächlich zurückgelegten Weg entsprechenden Impulszahlen, ab dem Startbeginn in festgesetzten Zeitintervallen abgefragt werden.

14. Röntgenuntersuchungsgerät nach Anspruch 11, dadurch gekennzeichnet, daß die Werte des Orts-Zeitprofils herstellerseitig für diskrete Bildschichtformate und Unterteilungsschritte ermittelt in Speichern 66, 67, 71, 72, 73, 74, 75 fest abgespeichert und in vorgegebenen Zeitintervallen abgefragt werden.

15. Röntgenuntersuchungsgerät nach Anspruch 11, dadurch gekennzeichnet, daß die Werte des Orts-Zeitprofils beim Einsetzen des Bildschichtträgers und der Wahl des Unterteilungsprogramms errechnet werden.

16. Röntgenuntersuchungsgerät nach Anspruch 1, dadurch gekennzeichnet, daß die Transportzeit für den größmöglichen Bildschichtträger so kurz wie möglich festgesetzt ist.

## Claims

1. X-ray examination apparatus with a target arrangement (3), with transportation means for the transportation of a tomograph carrier (7) from a ready position into an exposure position and vice versa, with facilities for regulating the speed of the drive motor (29), characterised in that the transportation means are designed such that, in the case of general survey photographs, the entire transportation time of the tomograph carrier (7) from the ready position into the exposure position is maintained constant independently of the mass which is to be transported.

2. X-ray examination apparatus as claimed in Claim 1, characterised in that the transportation time is maintained constant independently of the length of the transportation path (S₂), which differs when a subdivision programme is run.

3. X-ray examination apparatus as claimed in Claim 1, characterised in that the acceleration phase and the deceleration phase during one and the same transportation process are practically equal in length and have mutually symmetrical gradients.

4. X-ray examination apparatus as claimed in Claim 1, characterised in that the ready position is assigned means (35) for the determinate positioning of the tomograph carrier (7) and measuring means (31, 32, 33, 34) for measuring the width of the tomograph carrier in the direction of transport, and the drive motor (29) is assigned means (31, 32, 33, 34) for measuring the transportation path in question, and these measuring means are connected to a computer (43) for the determination of the total path ($S_2$) to be covered in respect of each division step of the separately input subdivision programme, for the selection of a location-time profile specified for the predetermined transportation time and the calculated transportation path, and for comparing the transportation path covered in the interval of time which has transpired since the exposure release with the transportation path which has been calculated as theoretical value in the location-time profile for this time interval.

5. X-ray examination apparatus as claimed in Claim 1, characterised in that the drive motor (29) is coupled to a perforated disc (31) which rotates in the light beam of a least one photoelectric device (34).

6. X-ray examination apparatus as claimed in Claim 1, characterised in that in the region of the ready position there is arranged a sensor (35) for the edges of the tomograph carrier (7) which stops the entry of the tomograph carrier.

7. X-ray examination apparatus as claimed in Claim 5 and 6, characterised in that the pulses which are counted when the tomograph carrier (7) moves past a photo-electric device (35) during the interruption of the light path by a perforated disc (31) are counted as a gauge of the width of the tomograph carrier (7) in the direction of transportation.

8. X-ray examination apparatus as claimed in Claim 6, characterised in that a photo-electric device (35) is arranged beside the ready position whose beam intersects the entry path of the tomograph carrier (7).

9. X-ray examination apparatus as claimed in Claim 8, characterised in that the photo-electric device (35) disconnects the drive motor when the tomograph carrier has been passed.

10. X-ray examination apparatus as claimed in Claim 4, characterised in that the computer (43) calculates the numbers of pulses corresponding to the transportation path from the ready position into the exposure position on the basis of the number of pulses corresponding to the width of the tomograph carrier (7) and on the basis of the input subdivision programme.

11. X-ray examination apparatus as claimed in Claim 10, characterised in that the computer (43) calculates the acceleration and deceleration, which is symmetrical to the acceleration, on the basis of the calculated transportation path and the predetermined transportation time.

12. X-ray examination apparatus as claimed in Claim 10 and 11, characterised in that at predetermined intervals of time the computer (43) compares the numbers of pulses which are likely to occur in accordance with the location-time profile with the numbers of pulses added since the exposure release in accordance with the covered transportation path, and controls a regulator (61) for the motor current and motor load in accordance with the sign of the comparison value.

13. X-ray examination apparatus as claimed in Claim 10 and 12, characterised in that the added numbers of pulses which correspond to the path which has actually been covered are interrogated from the start at predetermined intervals of time.

14. X-ray examination apparatus as claimed in Claim 11, characterised in that predetermined values of the location-time profile for discrete tomograph formats and subdivision steps are permanently stored in stores (66, 67, 71, 72, 73, 74, 75) and are interrogated at predetermined time intervals.

15. X-ray examination apparatus as claimed in claim 11, characterised in that the values of the location-time profile are calculated for the installation of the tomograph carrier and for the selection of the subdivision programme.

16. X-ray examination apparatus as claimed in Claim 1, characterised in that the transportation time for the largest possible tomograph carrier is set to be as short as possible.

**Revendications**

1. Appareil de radiodiagnostic comportant un sélecteur (3) muni de moyens de transport servant à assurer le transport d'un support (7) d'une couche d'image depuis une position de disponibilité dans une position de prise de vue et inversement, et comportant un système de réglage de la vitesse de rotation du moteur d'entraînement (29), caractérisé par le fait que les moyens de transport sont agencés de telle sorte que l'ensemble de la durée de transport du support (7) de la couche d'image, depuis la position de disponibilité dans la position de prise de vue, est maintenue constante, dans le cas de radiographies d'ensemble, indépendamment de la masse devant être transportée.

2. Appareil de radiodiagnostic suivant la revendication 1, caractérisé par le fait que la durée de transport est maintenue constante indépendamment de la longueur, qui est variable lors du déroulement d'un programme de subdivision, du trajet de transport ($S_2$).

3. Appareil de radiodiagnostic suivant la revendication 1, caractérisé par le fait que les phases d'accélération et de décélération possèdent des durées pratiquement identiques pendant une même opération de transport et que leurs déroulements sont maintenus symétriques l'un de l'autre.

4. Appareil de radiodiagnostic suivant la revendication 1, caractérisé par le fait qu'à la position de disponibilité sont associés des moyens (35) servant à réaliser le positionnement défini du support (7) de la couche d'image ainsi que des moyens de mesure (31, 32, 33, 34) servant à mesurer la largeur du support de la couche d'image suivant la direction de transport et qu'au moteur d'entraînement (29) sont associés des moyens (31, 32, 33, 34) servant à la mesure du trajet respectif de transport, et que ces moyens de mesure sont raccordés à un calculateur (43) servant à déterminer le trajet total ($S_2$), qui est parcouru lors de chaque pas de division du programme de subdivision introduit séparément, pour le choix d'un profil position-temps déterminé pour la durée de transport prédéterminée et pour le trajet de transport calculé, et pour la comparaison du trajet de transport, parcouru pendant l'intervalle de temps écoulé depuis le déclenchement de la prise de vue et du trajet de transport calculé en tant que valeur de consigne dans le profil position-temps pour cet intervalle de temps.

5. Appareil de radiodiagnostic suivant la revendication 1, caractérisé par le fait qu'un disque perforé (31), qui tourne dans le faisceau lumineux d'au moins un relais photoélectrique (34), est accouplé au moteur d'entraînement (29).

6. Appareil de radiodiagnostic suivant la revendication 1, caractérisé par le fait qu'un capteur (35) qui arrête la pénétration du support (7) de la couche d'image et qui sert à détecter les bords de ce support, est disposé dans la région de la position de disponibilité.

7. Appareil de radiodiagnostic suivant les revendications 5 et 6, caractérisé par le fait que les impulsions, qui sont comptées pendant l'interruption du trajet lumineux au niveau du disque perforé (31) lors du passage du support (7) de la couche d'image devant un relais photoélectrique (35), sont comptées en tant que mesure de la largeur du support (7) de la couche d'image suivant la direction de transport.

8. Appareil de radiodiagnostic suivant la revendication 6, caractérisé par le fait qu'un relais photoélectrique (35), dont le faisceau croise la voie d'introduction du support (7) de la couche d'image, est disposé à côté de la position de disponibilité.

9. Appareil de radiodiagnostic suivant la revendication 8, caractérisé en ce que le relais photoélectrique (35) débranche le moteur d'entraînement, après le passage du support de la couche d'image.

10. Appareil de radiodiagnostic suivant la revendication 4, caractérisé par le fait que le calculateur (43) calcule les nombres d'impulsions, qui correspondent au trajet de déplacement depuis la position de disponibilité dans la position de prise de vue, sur la base de nombres d'impulsions correspondant à la largeur du support (7) de la couche d'image, et du programme de subdivision introduit.

11. Appareil de radiodiagnostic suivant la revendication 10, caractérisé par le fait que le calculateur (43) calcule l'accélération et la décélération, symétriques par rapport à l'accélération, en prenant pour base le trajet de transport calculé et la durée de transport fixée.

12. Appareil de radiodiagnostic suivant les revendications 10 et 11, caractérisé par le fait que le calculateur (43) compare, pendant des intervalles de temps prédéterminés, les nombres d'impulsions auxquels il faut s'attendre conformément au profil position-temps, aux nombres d'impulsions dont la somme est effectuée depuis le déclenchement de la prise de vue conformément au trajet de transport parcouru, et commande, avec la valeur de comparaison et selon le signe, un régulateur (61) réglant le courant du moteur ou la charge de ce dernier.

13. Appareil de radiodiagnostic suivant les revendications 10 et 12, caractérisé par le fait que les nombres d'impulsions dont la somme est effectuée et qui correspondent au trajet parcouru effectivement, sont interrogés à partir du démarrage dans des intervalles de temps fixés.

14. Appareil de radiodiagnostic suivant la revendication 11, caractérisé par le fait que les valeurs du profil position-temps, qui sont déterminées chez le fabricant pour des formats discrets de couche d'image et pour des pas de subdivision discrets, sont mémorisées de façon fixe dans des mémoires 66, 67, 71, 72, 73, 74, 75 et sont interrogées à des intervalles de temps prédéterminés.

15. Appareil de radiodiagnostic suivant la revendication 11, caractérisé par le fait que les valeurs du profil position-temps sont calculées lors de l'insertion du support de la couche d'image et lors du choix du programme de subdivision.

16. Appareil de radiodiagnostic suivant la revendication 1, caractérisé par le fait que la durée de transport est fixée à une valeur aussi brève que possible pour le support de la couche d'image possédant les dimensions les plus grandes possibles.

FIG 1

FIG 2

FIG 3

$$\frac{a}{2} \cdot (t_2 - t)^2$$

$$\frac{a}{2} t^2$$

FIG 4

0 075 829

FIG 5

FIG 6

3

FIG 7

4